# EUROPEAN PATENT SPECIFICATION

(11) **EP 3 889 978 B1**
(45) Date of publication and mention of the grant of the patent: **16.08.2023**
(21) Application number: 20167922.2
(22) Date of filing: 03.04.2020
(51) Int. Cl.: H01F 27/40, G08C 17/02

(54) **WIRELESS TRANSMISSIONS THROUGH A TRANSFORMER TANK**
DRAHTLOSE ÜBERTRAGUNG DURCH EINEN TRANSFORMATORTANK
TRANSMISSION SANS FIL AU TRAVERS D'UN RÉSERVOIR D'UN TRANSFORMATEUR

(43) Date of publication of application: 06.10.2021
(73) Proprietor: Hitachi Energy Switzerland AG, 5400 Baden (CH)
(72) Inventor: SALINAS, Ener, 722 10 Västerås (SE); ERIKSSON, Göran, 723 35 Västerås (SE); GIRLANDA, Orlando, 723 56 Västerås (SE); RUSSBERG, Gunnar, 724 62 Västerås (SE)
(74) Representative: Valea AB

(56) References cited:
- DE-A1- 2 427 830
- US-A1- 2002 107 657
- US-A1- 2019 286 146
- US-B1- 6 446 027
- "Wireless Temperature Monitoring System", , 1 January 2011 (2011-01-01), XP055084234, Retrieved from the Internet: URL:http://static.schneider-electric.us/do cs/Electrical Distribution/0180IB0801.pdf [retrieved on 2013-10-16]

## Description

### TECHNICAL FIELD

The present disclosure relates to communication of sensor readings of a liquid-filled transformer.

### BACKGROUND

Continuous measurements of various parameters such as temperature, humidity, pressure, etc. from an active transformer are used for monitoring of its operating conditions and consequently for its reliability. When the transformer is enclosed and embedded in oil, it becomes particularly difficult to both power sensors and transmit power and acquired data inside a transformer, as well as to transmit the sensor data to the outside of the transformer tank. Especially the latter problem has yet to be resolved. The transfer of data/information to the outside of a tightly closed transformer tank, which is impermeable to liquid and air, is a challenge. Any hole made in the tank, for passing a cable there through, will be problematic because it may with time (e.g. due to aging of the insulation, for instance comprising an O-ring) eventually start leaking. Also, it may be problematic since such a cable will pass from high electrical potential within the transformer to a low electrical potential outside of the transformer.

US2002/107657 discloses an apparatus for measuring contact pressure exerted by a winding compression element on a winding in a power transformer in a tank. A sensor and a sensor antenna are arranged in the region of an upper compression element. An electronic checking device is provided outside the tank. A checking antenna in the tank is connected to the checking device via a radio frequency bushing, which passes through the wall of the tank.

DE2427830 relates to an electric heat sensor which is soldered to a conductor of a winding or inserted between parallel conductors of the winding. A transmitted signal is scanned by a receiving antenna attached to an inner wall of a transformer tank and passed through a bushing insulator to the outer side of the tank.

US2019/286146 shows a submersible ROV for inspecting a liquid-filled housing, such as for an electrical transformer. The ROV wirelessly communicates, via hole(s) in the housing, with a base station outside the housing.

### SUMMARY

It is an objective of the present invention to provide improved communication of sensor data from the inside of a liquid-filled transformer to the outside of the transformer tank.

According to an aspect of the present invention, there is provided a transformer system comprising a power transformer comprising a metal tank filled with an electrically insulating liquid, and a wireless sensor arrangement submerged in the insulating liquid within the tank. The sensor arrangement comprises a radio transmitter for wirelessly transmitting sensor readings to the outside of the transformer through an opening in the tank, said opening being provided with a liquid-tight seal comprising a solid insulator for preventing leakage from the tank of the insulating liquid, and wherein the radio transmitter is configured for transmitting the sensor readings using a carrier frequency within the range of from 100 kHz to 1 MHz.

According to another aspect of the present invention, there is provided a method of transmitting sensor readings in an embodiment of the transformer system of the present disclosure, the method comprising the sensor arrangement obtaining sensor readings on the power transformer, and the radio transmitter transmitting the sensor readings using a carrier frequency within the range of from 100 kHz to 1 MHz.

It has now been realised that radio waves may be able to pass through an opening of a transformer tank having a liquid-tight (i.e. liquid impermeable) seal comprising a solid insulator, e.g. of a dielectric material. The data/information about the sensor readings can thus be sent wirelessly from the inside of the power transformer, typically at a HV potential, to the outside of the power transformer, typically at low electrical potential. The radio waves will pass through the solid insulation from the inside of the transformer tank (which is typically of metal and thus generally shielding electromagnetic, i.e. radio, waves). There is thus no need for a cable passing through the tank, nor passing from high to low electrical potential. Preferably, the seal is also gas-tight, for preventing air from leaking into the transformer tank and polluting the insulation liquid, e.g. mineral oil or an ester liquid.

The solid insulator may e.g. be within a conventional bushing used for passing an electrical conductor, e.g. a phase, through the transformer tank. Additionally or alternatively, the solid insulator may be a sealing element between an outside of the (metal) transformer tank and a metal cap covering a hole in the transformer tank, e.g. a hole for accessing the inside of the tank during installation or maintenance. Depending of the physical characteristics of the opening, the insulating liquid and the solid insulator, the frequency of the carrier wave used for wirelessly transmitting the sensor readings by radio may be especially adapted to pass through the solid insulation to the outside of the tank.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic sectional side view of a transformer system in accordance with some embodiments of the present invention.
Fig 2 is a schematic view in longitudinal section of a bushing, in in accordance with some embodiments of the present invention.
Fig 3a is a schematic sectional detail of a transformer tank having an opening covered by a metal cap, in accordance with some embodiments of the present invention.
Fig 3b is a schematic top view of an embodiment of the metal cap of figure 3a.
Fig 4 is a schematic flow chart of a method in accordance with some embodiments of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

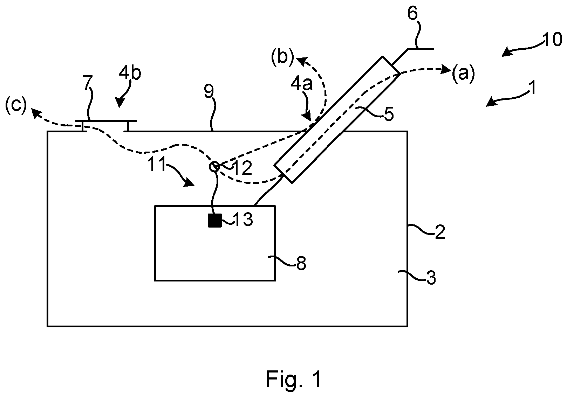

Figure 1 illustrates a transformer system 10 comprising a power transformer 1, e.g. a HV transformer, and a sensor arrangement 11.

The transformer 1 comprises an inductive arrangement 8, comprising transformer windings, submerged in an electrically insulating liquid 3 contained in a tank 2, typically completely filling the tank. The Liquid may be any suitable transformer liquid, e.g. an oil such as a mineral oil, or an ester liquid. The tank is typically of metal, e.g. steel, which is radio frequency shielding. The tank 2 has at least one opening 4 through a wall 9 of the tank. For instance, the transformer may comprise at least one, typically a plurality of, bushing 5 for passing an electrical conductor 6, e.g. for an electrical phase, through an opening 4a in a wall 9 of the tank 2. Also, the transformer may comprise a service opening 4b in a wall 9 of the tank 2, which is covered by a metal cap 7, typically of the same material as the tank 2. Thus, the opening 4a is provided with a liquid-tight seal comprising the bushing 5, while the opening 4b is provided with a liquid-tight seal comprising the cap 7.

The sensor arrangement 11 is submerged in the insulating liquid 3 and comprises a sensor 13 configured for measuring a property of the transformer, e.g. of the inductive arrangement 8. The sensor 13 is connected with a radio transmitter 12 of the sensor arrangement 11, for wirelessly transmitting sensor readings to the outside of the transformer 1 through an opening 4a and/or 4b in the tank 2. The radio transmitter 12 may be configured for transmitting the sensor readings using a predetermined carrier frequency within a frequency range which is empirically selected in view of the physical characteristics of the opening 4, solid insulator and insulating liquid 3 for enabling the radio transmission to pass through the opening 4. It has been determined that a carrier frequency within either of the ranges 100 kHz to 1 MHz and 300 MHz to 10 GHz may be especially useful for passing through a sealed opening 4.

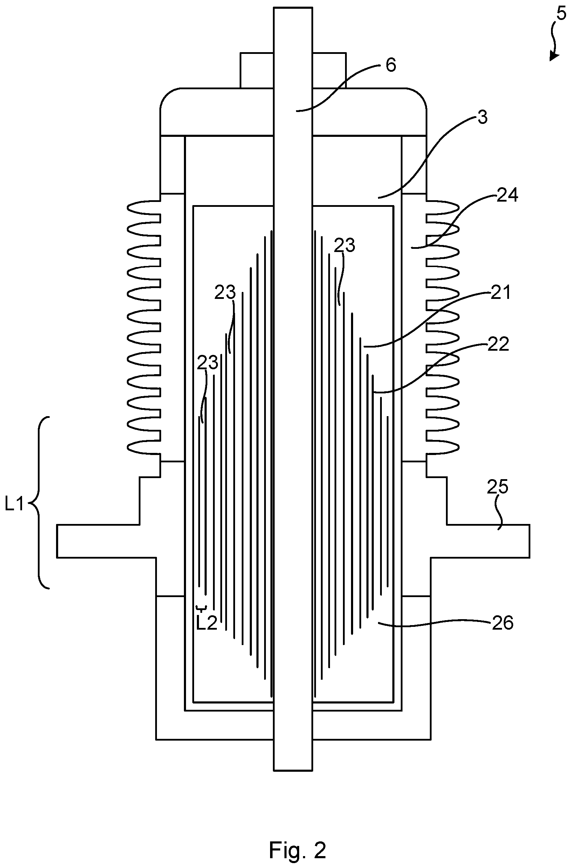

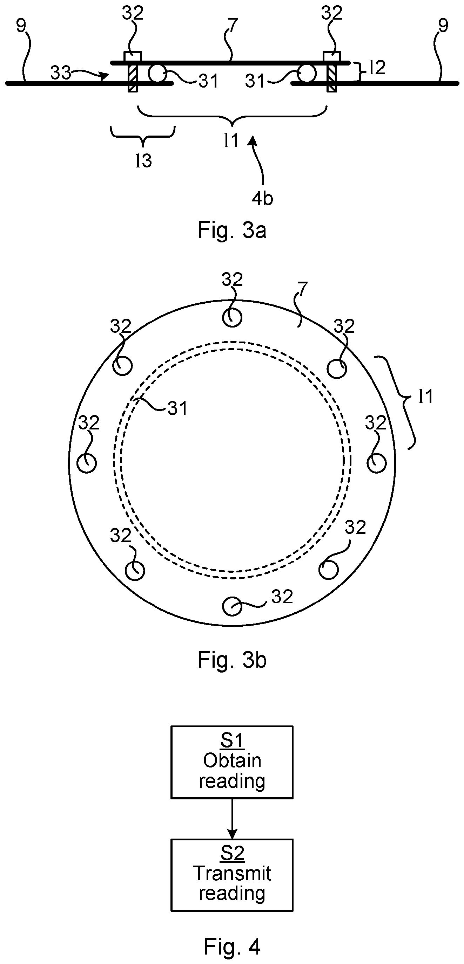

Figure 1 also illustrates a few possible different paths (a), (b) and (c) for the wireless transmission of the sensor readings from the radio transmitter 12. Path (a) is through the opening 4a, which is sealed by means of the bushing 5, through solid insulation within the bushing. Path (b) is also through the opening 4a, which is sealed by means of the bushing 5, but through solid insulation between the bushing 5 and the tank 2, e.g. solid insulation (possibly comprising an O-ring or the like) arranged between a flange 25 (see figure 2) of the bushing 5 and an outside of the wall 9 of the tank 2. Path (c) is through the opening 4b, which is covered by the cap 7, through solid insulation between the tank 2 and the cap 7, e.g. solid insulation (possibly comprising an O-ring 31 or the like, cf. figure 3a) arranged between the cap 7 and the outside of the wall 9 of the tank 2.

Figure 2 illustrates a bushing 5 which may be arranged through an opening 4a in the tank 2. The bushing may be substantially rotational symmetric and arranged for allowing the conductor 6 to run through a central longitudinal through hole through the bushing. The bushing 5 comprises a condenser core 26 which is arranged around the conductor 6, insulating the conductor from the surroundings, especially from the tank 2. The condenser core 26 comprises a solid insulator 21 and electrically conductive field-grading layers 22, e.g. in the form of aluminium foils. The field-grading layers 22 may form substantially concentric tubes around and in parallel with the conductor 6. The field-grading layers may e.g. be interleaved between layers of wound material of the solid insulator, e.g. of cellulose based paper, when producing the condenser core 26. Typically, outer field-grading layers 22 have a reduced longitudinal extension L1 (corresponding to height of the concentric tubes) compared with inner field-grading layers 22 such that the longitudinal extension is gradually reduced from the innermost field-grading layer to the outermost field-grading layer.

Each of the field-grading layers may have a thickness of less than 100 µm, e.g. within the range of 10 to 40 µm, and the radial distance L2 between the field-grading layer and a neighbouring inner our outer field-grading layer may be within the range of 0.1 mm and 10 mm, e.g. about 1 mm, corresponding to a plurality of turns of a web of the solid insulator 21 material. The longitudinal extension (height) L1 of the field-grading layer may be within the range of 1-10 m. Typically, the bushing is filled with the same insulating liquid 3 as the tank 2. However, the bushing is liquid-tight, and preferably also gas-tight, providing a liquid-tight seal of the opening 4a in the tank when the bushing is placed there through. The solid insulator 21 maybe impregnated with the insulating liquid, e.g. oil-impregnated paper.

It has been found that, a radio transmissions (path (a) of figure 1) using a carrier frequency within the range of from 100 kHz to 1 MHz, may pass through the solid insulator 21 in the gap 23 between two neighbouring field-grading layers 22 (i.e. two field-grading layers which do not have any field-grading layer between them, but typically only solid insulator 21, possibly impregnated with insulating liquid 3).

The bushing 5 may conventionally also comprise an outer, weather shed insulator 24 and/or a flange 25 for fastening the bushing to the outside of the wall 9 of the tank 2.

Figure 3a illustrates an opening 4b in a wall 9 of the tank 2, e.g. a service hole for accessing the interior of the tank during installation and/or service of the transformer 1. The opening 4b is covered by a metal cap 7 (e.g. substantially flat) which is typically fastened to the wall 9 by means of metal fastening means 32 such as screws or bolts, herein exemplified with screws 32. The cap 7 may have any suitable shape, as viewed from atop, e.g. a rectangular or circular shape. A solid insulator 31, e.g. comprising an O-ring of an elastic material, is arranged between the metal cap 7 and an outside of the tank wall 9 continuously around the opening 4b for providing a liquid-tight, and preferably also gas-tight, seal of the opening 4b.

When the cap 7 is fastened to the tank wall 9 by means of the metal fastening means 32, at least one slit 33 is formed between the outer surface of the wall 9 and the inner surface (i.e. the surface facing the opening 4b) of the metal cap 7. Each of the at least one slit 33 has a length l1 defined by the distance (typically the straight distance) between two neighbouring metal fastening means 32 (i.e. between two metal fastening means which do not have a further metal fastening means between them, e.g. along an outer edge of the cap 7). In such a slit 33, delimited by the metal cap, wall and fastening means, it has been found that radio waves (of path (c) of figure 1) may pass through the solid insulator 31 without being shielded by said metal cap, wall and fastening means. Similarly, radio waves of path (b) of figure 1 may pass through a solid insulator 31, with the cap 7 exchanged for the flange 25 of a bushing 5, i.e. in a slit 33 delimited by the outer surface of the wall 9 and the inner surface (i.e. the surface facing the opening 4a) of the flange 25, and by two neighbouring fastening means, e.g. bolts or screws, 32 fastening the flange 25 to the wall 9 around the opening 4a.

Preferably, the length l1 of the slit 33 is within the range of from 0.03 m (corresponding to a frequency of 10 GHz) or 0.1 m (corresponding to a frequency of 3 GHz) to 1 m (corresponding to a frequency of 300 MHz). Then, a carrier wave having a carrier frequency within the range of from 300 MHz to 10 GHz, or to 3 GHz, has been found to pass through the solid insulator 31 to the outside of the tank 2. The height l2 of the slit 33 should be large enough to prevent direct contact between the wall 9 and the cap 7, e.g. at least 10 µm such as within the range of 10 µm to 1 cm or 1 mm. The radial length l3 of the slit 33, i.e. the distance of overlap between the outer surface of the wall 9 and the cap 7 around the opening 4b, is preferably less than 10 cm, e.g. within the range of from 0.5 cm to 4 cm.

Figure 3b illustrates an embodiment of the cap 7 viewed from the top and having numerous fastening means 32, e.g. screws or bolts, arranged along an outer edge of the cap. In the embodiment of figure 3b, the cap is substantially circular, which may be preferred in some embodiments. As discussed in relation to figure 3a, the length l1 of the slit 33 may be defined by the straight distance between any two neighbouring fastening means 32.

Figure 4 is a flow chart of an embodiment of a method of the present disclosure. The method is for transmitting sensor readings in an embodiment of the transformer system 10 discussed herein. The sensor arrangement 11 obtain S1 sensor readings on the power transformer 1, e.g. measurements of temperature, pressure, flow rate of the insulating liquid, or the like within the tank 2, e.g. in or at the inductive arrangement 8. Then, the radio transmitter 12 transmits S2 the sensor readings wirelessly using a carrier frequency within the range of from 100 kHz to 1 MHz, e.g. through solid insulation 21 in a bushing 5, or within the range of from 300 MHz to 10 GHz, e.g. through solid insulation 31 between a cap 7 and a wall 9 of the tank.

In some embodiments of the present invention, the solid insulator 21 is comprised in a bushing 5 arranged in the tank opening 4a. In some embodiments, the solid insulator 21 comprises cellulose-based paper which is impregnated with the insulating liquid 3. In some embodiments, the solid insulator 21 is arranged between longitudinal electrically conductive field-grading layers 22 in a condenser core 26 of the bushing 5. In some embodiments, the field-grading layers 22 are arranged at a radial distance L2 from each other within the range of from 0.5 to 2 mm. In some embodiments, each of the field-grading layers 22 has a longitudinal extension L1 of at least 1 m, e.g. within the range of from 1 to 10 m. In some embodiments, the radio transmitter 12 transmits, or is configured for transmitting, the sensor readings using a carrier frequency within the range of from 100 kHz to 1 MHz.

In some embodiments of the present invention, the solid insulator 31 is comprised in a slit 33 formed between a wall 9 of the tank 2 and a metal cap 7 (or possibly flange 25) covering the tank opening 4b (or 4a). In some embodiments, the solid insulator 31 comprises an O-ring of an elastic material arranged between the metal cap 7 or flange 25 and an outside of the tank wall 9. In some embodiments, the slit 33 has a length l1 within the range of from 0.03 to 1 m. In some embodiments, the radio transmitter 12 is configured for transmitting the sensor readings using a carrier frequency within the range of from 300 MHz to 10 GHz.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A transformer system (10) comprising:
a power transformer (1) comprising a metal tank (2) filled with an electrically insulating liquid (3); and
a wireless sensor arrangement (11) submerged in the insulating liquid within the tank;
wherein the sensor arrangement comprises a radio transmitter (12) for wirelessly transmitting sensor readings to the outside of the transformer through an opening (4a; 4b) in the tank, said opening being provided with a liquid-tight seal comprising a solid insulator (21; 31) for preventing leakage from the tank of the insulating liquid, and
wherein the radio transmitter (12) is configured for transmitting the sensor readings using a carrier frequency within the range of from 100 kHz to 1 MHz.

2. The transformer system of claim 1, wherein the solid insulator (21) is comprised in a bushing (5) arranged in the tank opening (4a).

3. The transformer system of claim 2, wherein the solid insulator (21) comprises cellulose-based paper which is impregnated with the insulating liquid (3).

4. The transformer system of claim 2 or 3, wherein the solid insulator (21) is arranged between longitudinal electrically conductive field-grading layers (22) in a condenser core (26) of the bushing (5).

5. The transformer system of claim 4, wherein the field-grading layers (22) are arranged at a radial distance (L2) from each other within the range of from 0.5 to 2 mm.

6. The transformer system of claim 4 or 5, wherein each of the field-grading layers (22) has a longitudinal extension (L1) of at least 1 m, e.g. within the range of from 1 to 10 m.

7. A method of transmitting sensor readings in a transformer system (10) of any preceding claim, the method comprising:
the sensor arrangement (11) obtaining (S1) sensor readings on the power transformer (1); and
the radio transmitter (12) transmitting (S2) the sensor readings using a carrier frequency within the range of from 100 kHz to 1 MHz.

## Patentansprüche

1. Transformatorsystem (10), das Folgendes umfasst:
einen Leistungstransformator (1), der einen Metalltank (2) umfasst, der mit einer elektrisch isolierenden Flüssigkeit (3) gefüllt ist; und
eine drahtlose Sensoranordnung (11), die in die isolierende Flüssigkeit in dem Tank eingetaucht ist;
wobei die Sensoranordnung einen Funksender (12) zur drahtlosen Übertragung von Sensormesswerten nach außerhalb des Transformators über eine Öffnung (4a; 4b) in dem Tank umfasst, wobei die Öffnung mit einer einen soliden Isolator (21; 31) umfassenden flüssigkeitsdichten Abdichtung zum Verhindern des Austretens der isolierenden Flüssigkeit aus dem Tank versehen ist und wobei der Funksender (12) zum übertragen der Sensormesswerte unter Verwendung einer Trägerfrequenz im Bereich von 100 kHz bis 1 MHz ausgelegt ist.

2. Transformatorsystem nach Anspruch 1, wobei der solide Isolator (21) in einer in der Tanköffnung (4a) angeordneten Durchführung (5) enthalten ist.

3. Transformatorsystem nach Anspruch 2, wobei der solide Isolator (21) zellulosebasiertes Papier umfasst, das mit der isolierenden Flüssigkeit (3) imprägniert ist.

4. Transformatorsystem nach Anspruch 2 oder 3, wobei der solide Isolator (21) zwischen longitudinalen elektrisch leitfähigen Feldgradierungsschichten (22) in einem Verdichterkern (26) der Durchführung (5) angeordnet ist.

5. Transformatorsystem nach Anspruch 4, wobei die Feldgradierungsschichten (22) in einem radialen Abstand (L2) voneinander im Bereich von 0,5 bis 2 mm angeordnet sind.

6. Transformatorsystem nach Anspruch 4 oder 5, wobei jede der Feldgradierungsschichten (22) eine Längserstreckung (L1) von mindestens 1m, z. B. im Bereich von 1 bis 10 m, aufweist.

7. Verfahren zum Übertragen von Sensormesswerten in einem Transformatorsystem (10) nach einem der vorhergehenden Ansprüche, wobei das Verfahren Folgendes umfasst:
Erhalten (S1), durch die Sensoranordnung (11), von Sensormesswerten an dem Leistungstransformator (1); und
Übertragen (S2), durch den Funksender (12), der Sensormesswerte unter Verwendung einer Trägerfrequenz im Bereich von 100 kHz bis 1 MHz.

## Revendications

1. Système de transformateur (10) comprenant :
un transformateur de puissance (1) comprenant une cuve de métal (2) remplie d'un liquide isolant électriquement (3) ; et
un agencement de capteurs sans fil (11) submergé dans le liquide isolant à l'intérieur de la cuve ;
l'agencement de capteurs comprenant un émetteur radio (12) pour émettre sans fil des lectures de capteurs vers l'extérieur du transformateur via une ouverture (4a ; 4b) dans la cuve, ladite ouverture étant munie d'un joint étanche aux liquides comprenant un isolant solide (21 ; 31) pour empêcher une fuite du liquide isolant depuis la cuve, et
l'émetteur radio (12) étant configuré pour émettre les lectures de capteurs en utilisant une fréquence porteuse dans la plage allant de 100 kHz à 1 MHz.

2. Système de transformateur selon la revendication 1, l'isolant solide (21) étant compris dans une traversée (5) agencée dans l'ouverture de cuve (4a).

3. Système de transformateur selon la revendication 2, l'isolateur solide (21) comprenant du papier à base de cellulose qui est imprégné avec le liquide isolant (3).

4. Système de transformateur selon la revendication 2 ou 3, l'isolateur solide (21) étant agencé entre des couches de gradient de champ (22) conductrices électriquement longitudinales dans un coeur de condensateur (26) de la traversée (5).

5. Système de transformateur selon la revendication 4, les couches de gradient de champ (22) étant agencées à une distance radiale (L2) les unes des autres dans la plage allant de 0,5 à 2 mm.

6. Système de transformateur selon la revendication 4 ou 5, chacune des couches de gradient de champ (22) ayant une extension longitudinale (L1) d'au moins 1 m, par ex. dans la plage allant de 1 à 10 m.

7. Procédé d'émissions de lectures de capteurs dans un système de transformateur (10) selon une quelconque revendication précédente, le procédé comprenant :
l'obtention (S1), par l'agencement de capteurs (11), de lectures de capteurs sur le transformateur de puissance (1) ; et
l'émission (S2), par l'émetteur radio (12), des lectures de capteurs en utilisant une fréquence porteuse dans la plage allant de 100 kHz à 1 MHz.
